# EUROPEAN PATENT APPLICATION

(11) **EP 4 484 696 A1**
(43) Date of publication of application: **01.01.2025**
(21) Application number: 23182864.1
(22) Date of filing: 30.06.2023
(51) Int. Cl.: E21B 4/00, F16H 1/32, E21B 29/00

(54) **DOWNHOLE WIRELINE TOOL**

(71) Applicant: Welltec A/S, 3450 Allerød (DK)
(72) Inventor: ANDERSEN, Tomas Sune, 3450 Allerød (DK)
(74) Representative: Dragsted Partners A/S

(57) **Abstract**

The present invention relates to a downhole wireline tool for performing an operation downhole in a well tubular metal structure in a well containing well fluid, the downhole wireline tool having an axial extension and a front face facing away from a top of the well, and the downhole wireline tool comprising a wireline connection unit for connection to a wireline, an electric motor powered by the wireline for rotating a rotatable shaft at a first rotational speed, an operational tool part for performing the operation by means of electricity and/or hydraulic fluid, and a pericyclic gear arranged between the electric motor and the operational tool part, the pericyclic gear being driven by the rotatable shaft of the electric motor for rotation of the operational tool part by an output rotatable shaft at a second rotational speed, wherein the pericyclic gear has a channel through which an electric and/or a fluid line extends to provide electricity and/or fluid power for operating the operational tool part. The invention also relates to a downhole system comprising the downhole wireline tool and a driving unit, such as a downhole tractor, for propelling the downhole system forward in the well.

## Description

The present invention relates to a downhole wireline tool for performing an operation downhole in a well tubular metal structure in a well containing well fluid, the downhole wireline tool having an axial extension and a front face facing away from a top of the well. The invention also relates to a downhole system comprising the downhole wireline tool and a driving unit, such as a downhole tractor, for propelling the downhole system forward in the well.

In downhole wireline tools, power and space are limited, and therefore the function of the tools is also limited and dependent on design and smart ways to use the limited power efficiently to avoid any waste of power. However, the limited space down in the well necessitates tool design using one electric motor for several purposes, and if those purposes require various rotational speeds, gears for increasing or decreasing the rotational speed of the output rotatable shaft of the motor are needed. Further, if pumping is required, only one pump for all purposes is used, and the hydraulic control and distribution section supplies the pressurised fluid in the required state for all purposes. Using gears and hydraulic sections decreases the overall efficiency and limits the capability of the wireline tools. Also, the more complex the tool is, the more wear often occurs. Thus, the tool designer needs to find more efficient components to redesign the tool and/or to accumulate power in order for new wireline tools to be able to perform new and more demanding operations.

It is an object of the present invention to wholly or partly overcome the above disadvantages and drawbacks of the prior art. More specifically, it is an object to provide an improved downhole wireline tool which is able to perform demanding intervention operations in wells without limiting tool efficiency, reducing tool wear resistance or substantially increasing the radial and axial dimensions of the tool.

The above objects, together with numerous other objects, advantages and features, which will become evident from the below description, are accomplished by a solution in accordance with the present invention by a downhole wireline tool for performing an operation downhole in a well tubular metal structure in a well containing well fluid, the downhole wireline tool having an axial extension and a front face facing away from a top of the well, and the downhole wireline tool comprising:
- a wireline connection unit for connection to a wireline,
- an electric motor powered by the wireline for rotating a rotatable shaft at a first rotational speed,
- an operational tool part for performing the operation by means of electricity and/or hydraulic fluid, and
- a pericyclic gear arranged between the electric motor and the operational tool part, the pericyclic gear being driven by the rotatable shaft of the electric motor for rotation of the operational tool part by an output rotatable shaft at a second rotational speed,
wherein the pericyclic gear has a channel through which an electric and/or a fluid line extends to provide electricity and/or fluid power for operating the operational tool part.

Furthermore, the pericyclic gear may be a nutating pericyclic gear such as a wobbling or nutating bevel gear.

In addition, the pericyclic gear may have a centre axis.

Moreover, the centre axis may be coincident with a rotational centre axis of the electric motor.

Further, the downhole wireline tool may have a centre tool axis.

Also, the centre axis may be coincident with the centre tool axis.

Furthermore, the channel may have a centre channel axis coincident with the centre axis of the pericyclic gear.

In this way, the electric and/or fluid line is/are not twisted, and electricity and/or fluid power can be provided without any inefficient connections.

In addition, the channel may be provided by a through-bore in the rotatable shaft and the output rotatable shaft.

Moreover, the channel may extend along the axial extension.

Further, the pericyclic gear may be a reduction gear for reducing the rotational speed of the rotatable shaft.

Also, the reduction gear may be a wobbling or nutating bevel gear for reducing the rotational speed of the rotatable shaft with a reduction ratio of at least 1:10, preferably at least 1:50, more preferably at least 1:100, even more preferably at least 1:200, and even more preferably at least 1:1000.

Furthermore, the pericyclic gear may comprise a reaction control member driven by the rotatable shaft, a pericyclic motion converter driven by the reaction control member and an output gear driven by the pericyclic motion converter for driving an output rotatable shaft connected to the first gearing part.

In addition, the operational tool part may comprise a drilling bit or a machining bit.

Moreover, the machining bit may comprise inserts extending from the front face along the axial extension.

Further, the inserts may be distributed along the circumference.

Also, the inserts may be abrasive inserts.

Furthermore, the inserts may comprise grains and binder.

In addition, the grains may be made of tungsten carbide, diamonds or the like.

Moreover, the operational tool part may comprise a vibration-generating unit for providing vibration force on the first drilling bit.

Further, the downhole wireline tool may also comprise a driving unit for driving the vibration-generating unit, the driving unit being powered by the line extending through the channel.

Also, the driving unit may comprise an electric motor.

Furthermore, the downhole wireline tool may also comprise a pump unit driven by the electric motor at a first rotational speed for providing fluid power in the form of pressurised fluid to the operational tool part through the line extending through the channel.

In addition, the pump unit may pump fluid inside the tool to provide pressurised fluid inside the channel and in part of the tool string to compensate for and provide an overpressure in the tool string so that well fluid cannot enter unintended parts of the tool string.

Moreover the downhole wireline tool may have both a fluid line and an electric line extending along and inside the channel.

Further, the electric line may also power a sensor in the operational tool part.

Also, the machining bit or drilling bit may be hollow.

Furthermore, the downhole wireline tool may also comprise a drill bit such as a pilot bit or a similar bit arranged partly inside the machining bit or drilling bit and able to cut its way through a component by drilling.

In addition, the drill bit or pilot bit may be connected to a rotatable shaft extending through the channel.

Moreover, the operational tool part may comprise at least one cutting arm with at least one cutting element, the at least one cutting arm being projectable by means of the pressurised fluid for moving the cutting arm between a retracted position and a projected position, and the operational tool part being rotated by the output rotatable shaft for cutting in the well tubular metal structure.

Further, the pump unit may comprise at least one pump inlet in fluid communication with the well fluid for taking in well fluid from the well and ejecting the fluid again in the vicinity of the operational tool part.

Also, the pericyclic gear may comprise bearings arranged between the rotatable shaft and the reaction control member, the pericyclic motion converter and the output gear.

Furthermore, teeth of the reaction control member may engage a first set of teeth of the pericyclic motion converter, and a second set of teeth of the pericyclic motion converter may engage teeth of the output gear, the output gear being connected to the output rotatable shaft.

In addition, the downhole wireline tool may further comprise an electric control unit, the wireline connection unit being connected to the electric control unit.

Moreover, the downhole wireline tool may further comprise a driving unit, such as a downhole tractor, for propelling the tool forward in the well.

Further, the downhole wireline tool may also comprise an anchoring section for anchoring the tool at a position in the well so that a first tool part of the tool comprising the wireline connection unit is prevented from moving along the axial extension.

Also, the tool may comprise a second tool part rotating in relation to the first tool part.

Finally, the invention also relates to a downhole system comprising the downhole wireline tool and a driving unit, such as a downhole tractor, for propelling the downhole system forward in the well.

The invention and its many advantages will be described in more detail below with reference to the accompanying schematic drawings, which for the purpose of illustration show some non-limiting embodiments and in which:
Fig. 1 shows a partly cross-sectional view of a downhole wireline tool,
Fig. 2 shows a partly cross-sectional view of another downhole wireline tool,
Fig. 3 shows a partly cross-sectional view of yet another downhole wireline tool,
Fig. 4 shows a partly cross-sectional view of a pericyclic gear of a downhole tool,
Fig. 5 shows a cross-sectional view of another pericyclic gear of another downhole tool,
Fig. 6 shows a cross-sectional view of yet another pericyclic gear of yet another downhole tool, and
Fig. 7 shows a cross-sectional view of yet another pericyclic gear of yet another downhole tool.

All the figures are highly schematic and not necessarily to scale, and they show only those parts which are necessary in order to elucidate the invention, other parts being omitted or merely suggested.

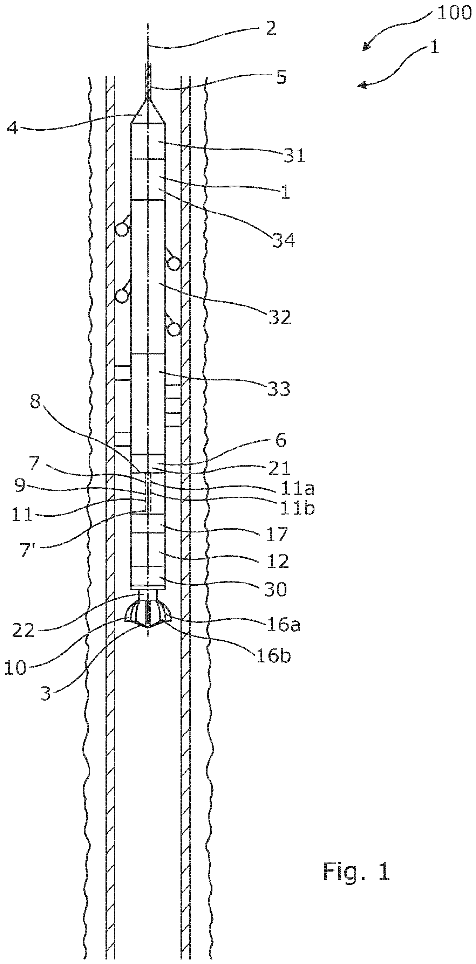

Fig. 1 shows a downhole wireline tool 1 for performing an operation downhole in a well tubular metal structure in a well containing well fluid. The downhole wireline tool 1 has an axial extension 2 and a front face 3 facing away from a top of the well. The downhole wireline tool 1 comprises a wireline connection unit 4 for connection to a wireline 5, an electric motor 6 powered by the wireline 5 for rotating a rotatable shaft 7 at a first rotational speed and an operational tool part 10 for performing the operation by means of electricity and/or hydraulic fluid. The downhole wireline tool 1 further comprises a pericyclic gear 8 arranged between the electric motor and the operational tool part, where the pericyclic gear 8 is driven by the rotatable shaft 7 of the electric motor 6 for rotation of the operational tool part 10 by an output rotatable shaft 7' at a second rotational speed. The pericyclic gear 8 is a nutating pericyclic gear having a channel 9 through which an electric and/or a fluid line 11, 11a, 11b extends to provide electricity and/or fluid power for operating the operational tool part 10.

Electric motors are used for many purposes in downhole wireline tools, and in order to maintain the highest possible power efficiency, the motor is carefully selected to match the required need and take into account the limited power running through the wireline. When requiring rotational power further down the tool with a rotational speed different from that of the rotatable shaft of the electric motor, a gear needs to be used, but then the transmission of electric and hydraulic power to the operational tool part has to be very limited, if possible, to avoid reducing the efficiency of the chosen gear. By using a pericyclic gear such as a wobbling or nutating bevel gear, the centre of the gear can be designed with the channel providing access for an electric and/or a fluid line to provide electricity and/or fluid power for operating the operational tool part.

The pericyclic gear 8 has a centre axis which is coincident with a rotational centre axis of the electric motor 6 and a centre tool axis of the downhole wireline tool. The channel 9 has a centre channel axis coincident with the centre axis of the pericyclic gear 8. In this way, the electric and/or fluid line 11, 11a, 11b can extend through the gear 8 and is not twisted, allowing electricity and/or fluid power to be provided without any inefficient connections, while the gearing from the motor 6 to the operational tool part 10 is maintained very efficient. In prior art tools, fluid channels or electricity compromise the dimension of the gear as the channels are arranged in the tool housing, limiting the space for the gear, and the gear is therefore not so efficient if fluid and/or electric power has to pass the gear section.

The channel 9 extends along the axial extension 2 and is provided by a through-bore in the rotatable shaft 7 and the output rotatable shaft 7', and through the wobbling or nutating bevel gear 8, and the axis of rotation of both the electric motor 6, the rotatable shafts 7, 7' and the wobbling or nutating bevel gear 8 is thus coincident with the centre channel axis. The wobbling or nutating bevel gear 8 can be made so that the gear can extend around the channel 9 and provide enough room in the channel for a fluid line to pass through the channel.

In Fig. 1, the operational tool part 10 comprises a drilling bit 16, 16a that is rotatable by means of the output rotatable shaft 7'. The operational tool part 10 comprises a vibration-generating unit 12 for providing vibration force on the drilling bit to enhance the machining operation of the operational tool part 10, where the vibration-generating unit 12 is configured to transform a rotational force into a vibration force. The downhole wireline tool 1 further comprises a driving unit 17 that is configured to provide rotational force to the vibration-generating unit 12 for driving the vibration-generating unit 12, and the driving unit 17 is powered by the line 11, 11a, 11b extending through the channel 9. The driving unit 17 comprising the electric motor 6 and the electric line 11, 11b powers the electric motor 6 of the driving unit 17. Both a fluid line 11, 11a) and an electric line 11, 11b extend along and inside the channel 9. The electric line 11, 11b may also power a sensor in the operational tool part 10.

Especially when powering additional equipment such as the driving unit 17 for driving the vibration-generating unit 12, demanding logging units or the like have proven very difficult in known tools where gearing is also required. By using the wobbling or nutating bevel gear, such powering is possible without limiting the dimension and efficiency of the wobbling or nutating bevel gear.

The vibration-generating unit 12 is connected with the drilling bit 16, 16a via the output rotatable shaft 7' rotating the drilling bit 16, 16a. The vibration-generating unit 12 provides oscillating vibration force in a direction that is parallel, coaxial and/or coincident with the axial extension 2 of the downhole wireline tool 1.

By having vibrations in the form of an oscillating vibration force in a direction that is parallel, coaxial and/or coincident with the longitudinal tool axis, the drilling bit 16, 16a is able to machine in harder materials further down the well than without such vibration force. The vibration-generating unit 12 provides oscillating vibration force at a frequency of more than 50 Hz, more preferably more than 100 Hz, and even more preferably more than 200 Hz. Moreover, the vibration-generating unit 12 may provide oscillating vibration force at a frequency of less than 800 Hz, more preferably less than 600 Hz, and even more preferably less than 450 Hz.

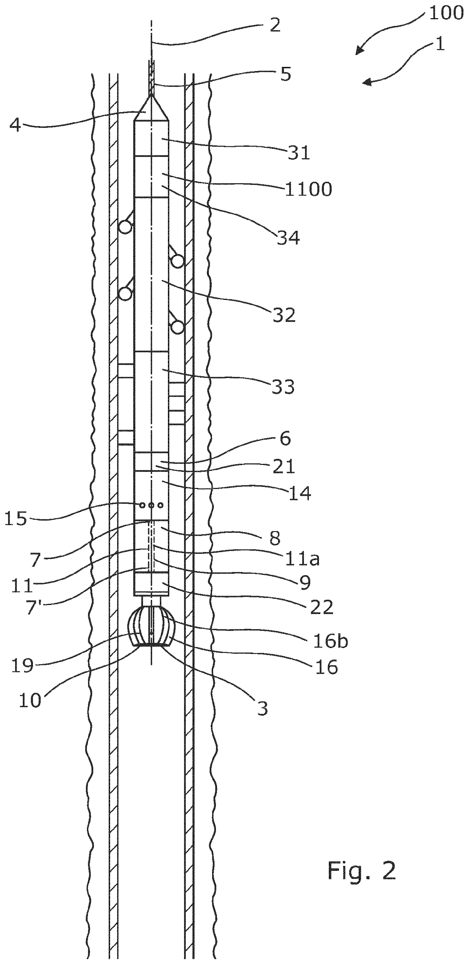

In Fig. 2, the operational tool part 10 comprises a machining bit 16, 16b comprising inserts 19 extending from the front face 3 along the axial extension 2. The inserts 19 are distributed along the circumference of the machining bit 16, 16b. The inserts are abrasive inserts comprising grains and binder. The grains are made of tungsten carbide, diamonds or the like.

The downhole wireline tool 1 further comprises a pump unit 14 driven by the electric motor 6 at a first rotational speed for providing fluid power in the form of pressurised fluid to the operational tool part 10 through the fluid line 11, 11a extending through the channel 9. The pump unit 14, shown in Fig. 2, comprises a pump inlet 15 in fluid communication with the well fluid for taking in well fluid from the well and ejecting the fluid again in the vicinity of the operational tool part 10. The well fluid is expelled through the machining bit 16, 16b or in the vincinity of the machining bit 16, 16b.

In another embodiment not shown, the pump unit 14 comprises a pump outlet for expelling fluid into the well.The pump outlet is arranged in a circumferential wall of the pump, the well fluid is sucked in through the operational tool part 10, and the pump inlet 15 is in fluid communication with the well fluid passing in through openings in the drilling or machining bit 16, 16a, 16b.

The machining bit 16 may also be hollow, wherein a drill bit such as a pilot bit or a similar bit is arranged and able to cut its way through a component by drilling. The drill bit or pilot bit may be connected to a rotational drive shaft extending through the channel 9.

In Fig. 1, the pump unit 14 pumps fluid inside the tool 1 to provide pressurised fluid inside the channel 9 and part of the tool 1 to compensate for and provide an overpressure inside the tool so that well fluid cannot enter unintended parts of the tool 1.

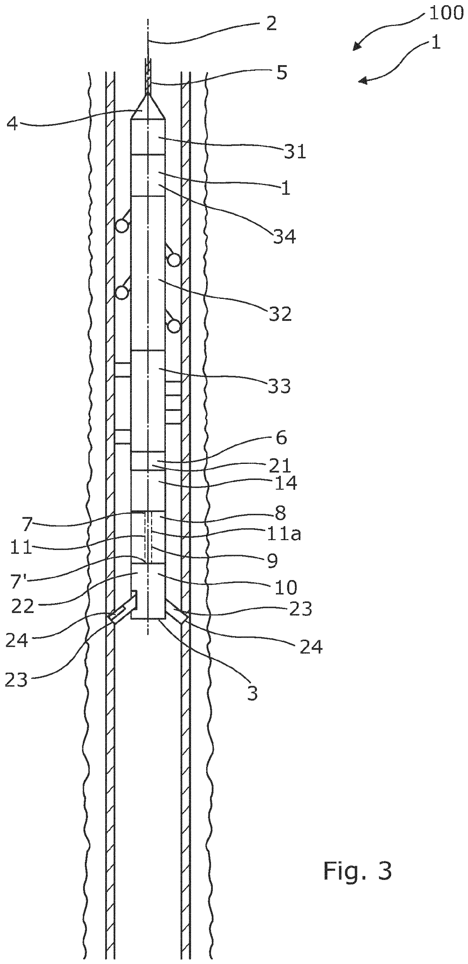

In Fig. 3, the operational tool part 10 comprises three cutting arms 23 with at least one cutting element 24. Each cutting arm 23 is projectable by means of the pressurised fluid for moving the cutting arm 23 between a retracted position and a projected position, and the operational tool part 10 is rotated by the output rotatable shaft 7' for cutting in the well tubular metal structure.

In Fig. 1, the pericyclic gear 8 is a reduction gear for reducing the rotational speed of the rotatable shaft 7 with a reduction ratio of at least 1:10, preferably at least 1:50, more preferably at least 1:100, even more preferably at least 1:200, and even more preferably at least 1:1000.

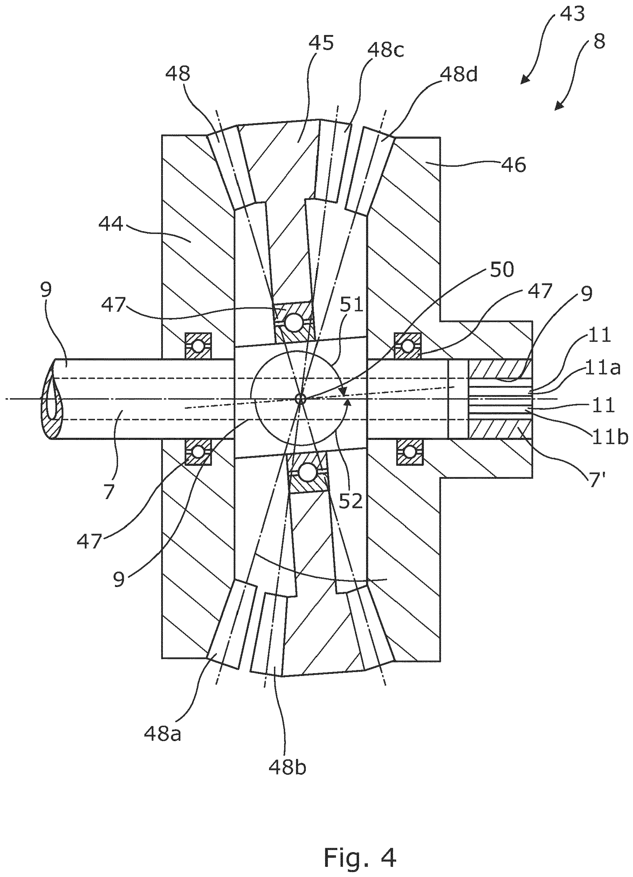

In order to reduce the rotational speed of the output rotatable shaft 7', the downhole wireline tool 1 may further comprise a reduction gear 43, such as a pericyclic gear 43, as shown in Fig. 4. The pericyclic gear 43 may be a wobbling gear or a nutating bevel gear for reducing the rotational speed of the rotatable shaft 7. The pericyclic gear 43 comprises a reaction control member 44 driven by the rotatable shaft 7, a pericyclic motion converter 45 driven by the reaction control member 44, an output gear 46 driven by the pericyclic motion converter 45 for driving the output rotatable shaft 7' connected to the first gearing part. The pericyclic motion converter 45 is the wobbling element. The nutating wobble motion will cause fluctuating moments around an axis 50 which alternates between a CW direction 51 and a CCW direction 52. The rotational speed of the rotatable shaft 7 is thus reduced at the output rotatable shaft 7'. The rotatable shaft 7 and the output rotatable shaft 7' as well as the centre part of the pericyclic gear 43 are hollow so that electric lines or hydraulic lines can pass through them. Teeth 48, 48a of the reaction control member 44 engage a first set of teeth 48, 48b of the pericyclic motion converter 45, and a second set of teeth 48, 48c of the pericyclic motion converter 45 engages teeth 48, 48d of the output gear 46, the output gear 46 being connected to the output rotatable shaft 7'. The reaction control member 44 has the teeth 48a with a teeth number Z1 engaging teeth 48b with a teeth number Z2, on one side of the pericyclic motion converter 45, and on the other side of the pericyclic motion converter 45, teeth 48c with a teeth number Z3 engage teeth 48d with a teeth number Z4 of the output gear 46 in order to reduce the rotational speed of the rotatable shaft 7. The teeth number Z1 is one tooth 48 less than the teeth number Z2, and the teeth number Z3 is one tooth less than the teeth number Z4. The teeth number Z1/Z2 may be 40/41, and the teeth number Z3/Z4 may be 61/60, which corresponds to a reduction ratio of 1:123. The teeth number Z1/Z2 may also be 20/21, and the teeth number Z3/Z4 may be 32/31, which corresponds to a reduction ratio of 1:59. Thus, the reduction ratio may be up to 1:1000. The reduction gear 43 is thus a double- or two-sided nutating bevel gear or wobbling gear.

By using a pericyclic gear such as a wobbling gear or a nutating bevel gear for reducing the rotational speed of the rotatable shaft, the reduction gear 43 has a higher efficiency than conventional planetary reduction gears. A wobbling gear or a nutating bevel gear is also more robust, easier to mount and requires less space. In downhole wireline tools, the tools are internally pressure-compensated, and thus fluid acts against any motion, which means that by using a wobbling gear or a nutating bevel gear, the efficiency is higher as the teeth do not intentionally act as "scoop wheel".

The pericyclic gear 8 comprises bearings 47 arranged between the rotatable shaft 7 and the reaction control member 44, the pericyclic motion converter 45 and the output gear 46.

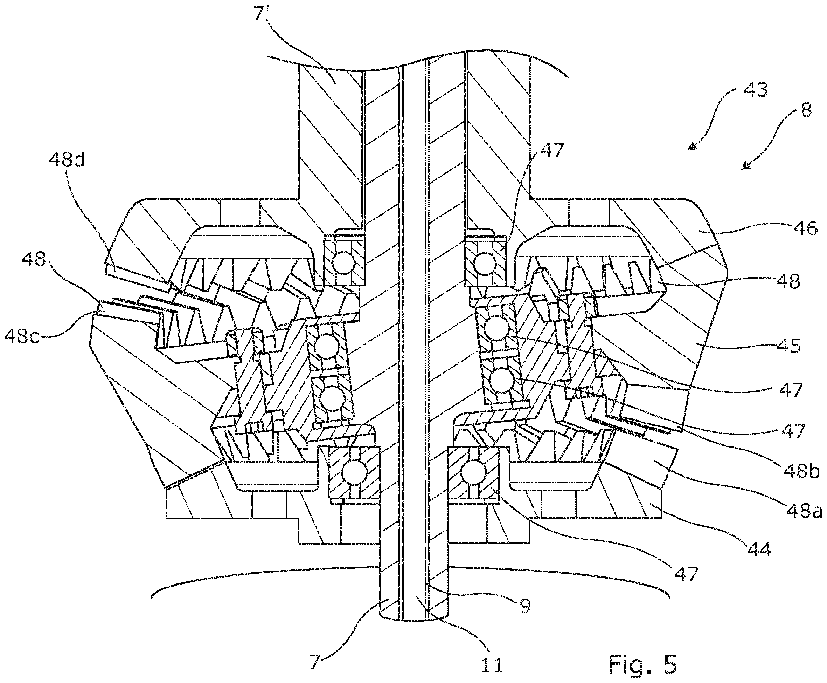

In Fig. 5, the reduction gear 43 is also a wobbling gear or a nutating bevel gear, but the output gear 46 has a larger diameter than that of the reaction control member 44. The wobbling pericyclic motion converter 45 has a diameter matching the diameter of the output gear 46 on one side, and on the other side a diameter matching the diameter of the reaction control member 44. By having varying diameters, the reduction gear 43 can be made with an overall smaller outer diameter than that of Fig. 4. As can be seen, the rotatable shaft 7 and the output rotatable shaft 7' have a hollow passage for electric lines and/or hydraulic lines.

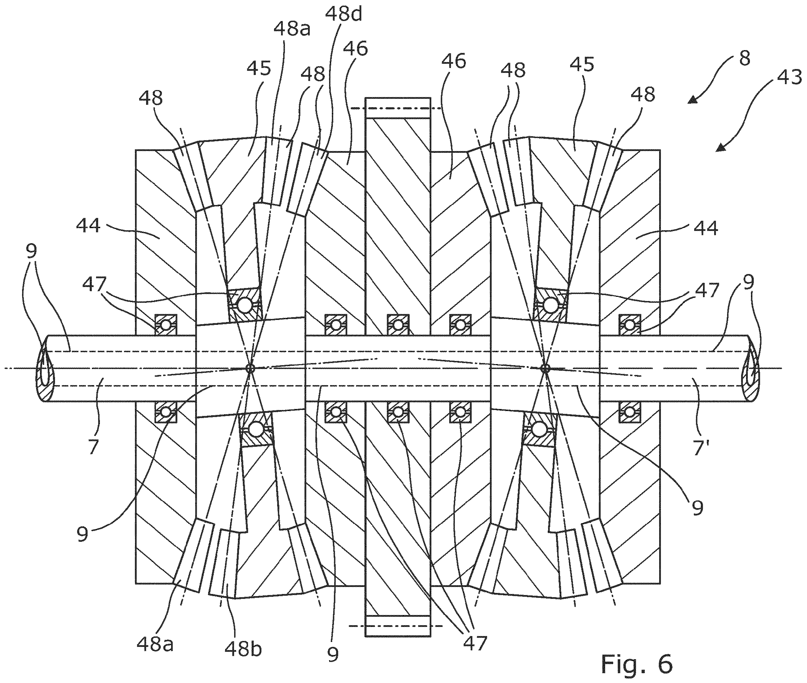

Fig. 6, shows a reduction gear 43 which is a balanced pericyclic transmission gear in that the reduction gear 43 of Fig. 4 is supplemented with a balancing part of a similar configuration in order to outbalance any vibration caused by the reduction gear 43 of Fig. 4. The function of the reduction gear 43 shown in Fig. 6 is the same as the reduction gear 43 shown in Fig 4. The rotatable shafts 7, 7' are hollow, and the number of teeth is the same.

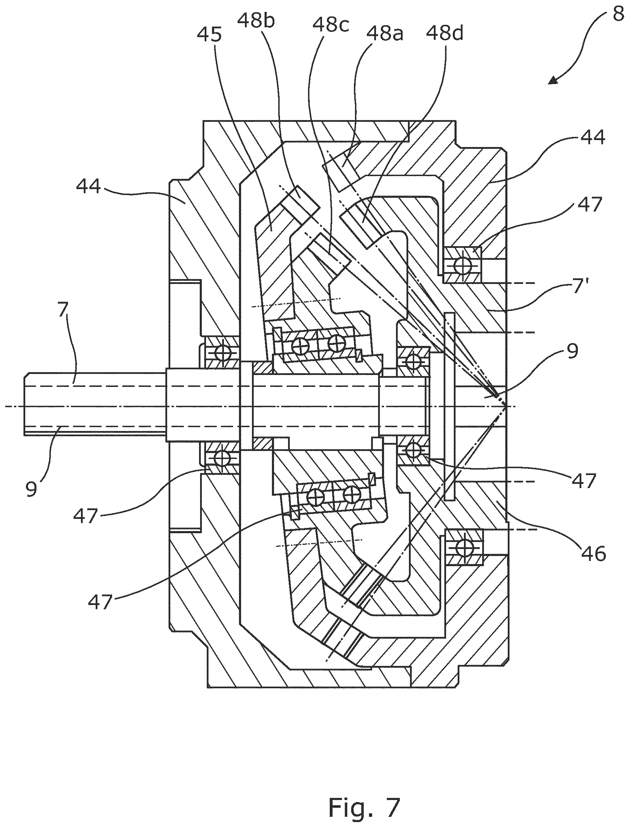

The reduction gear 43 shown in Fig. 7 also comprises a wobbling pericyclic motion converter 45 as in Figs. 4-6, but the set of teeth 48b engaging the teeth 48a of the reaction control member 44 is positioned on the same side of the wobbling pericyclic motion converter 45 as the teeth 48c engaging the teeth 48d of the output gear 46. The reduction gear 43 of Fig. 7 has a larger outer diameter that the gears of Figs. 4-6, but a shorter extension along the axial extension 2 to achieve the same strength and number of teeth. The rotatable shafts 7, 7' are hollow for electric and/or hydraulic feedthrough.

In Fig. 1, a downhole system 100 is shown comprising the downhole wireline tool 1 and a driving unit 32, such as a downhole tractor, for propelling the downhole system 100 forward in the well. The downhole wireline tool 1 further comprises an electric control unit 31 driving a pump and motor section 34 for driving the driving unit 32, and the wireline connection unit 4 is connected to the electric control unit 31. The downhole wireline tool 1 also comprises an anchoring section 33 driven by the pump and motor section 34 for anchoring the tool at a position in the well so that a first tool part 21 of the tool comprising the wireline connection unit 4 is prevented from moving along the axial extension 2. The downhole wireline tool 1 comprises a second tool part 22 rotating in relation to the first tool part 21, the second tool part 22 comprising the machining bit 16, 16b.

The vibration-generating unit 12 comprises a wave-bearing or a magnetostrictive oscillator providing the vibration force. In another aspect, the vibration-generating unit 12 may comprise a rotatable cam mechanism comprising a first cam profile rotated in relation to a cooperating second cam profile. The vibration-generating unit 12 may comprise a vibration-transmission unit 30 comprising a spring system configured to transmit and enhance the vibrations generated by the vibration-generating unit 12. The spring system may be formed as a monolithic whole and shaped like stacked Belleville Washers. The spring system may also comprise two or more frusto-conical springs arranged in series and/or two or more Belleville Springs arranged in series.

The downhole wireline tool 1 may further comprise a stroking tool which is a tool providing an axial force on the operational tool part 10. The stroking tool comprises an electric motor for driving a pump. The pump pumps fluid into a piston housing to move a piston acting in the housing. The piston is arranged on the stroker shaft. The pump may pump fluid out of the piston housing on one side and simultaneously suck fluid in on the other side of the piston.

By fluid or well fluid is meant any kind of fluid that may be present in oil or gas wells downhole, such as natural gas, oil, oil mud, crude oil, water, etc. By gas is meant any kind of gas composition present in a well, completion or open hole, and by oil is meant any kind of oil composition, such as crude oil, an oil-containing fluid, etc. Gas, oil and water fluids may thus all comprise other elements or substances than gas, oil and/or water, respectively.

By casing or well tubular metal structure is meant any kind of pipe, tubing, tubular, liner, string, etc., used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor^{®}.

Although the invention has been described above in connection with preferred embodiments of the invention, it will be evident to a person skilled in the art that several modifications are conceivable without departing from the invention as defined by the following claims.

## Claims

1. A downhole wireline tool (1) for performing an operation downhole in a well tubular metal structure in a well containing well fluid, the downhole wireline tool having an axial extension (2) and a front face (3) facing away from a top of the well, and the downhole wireline tool comprising:
- a wireline connection unit (4) for connection to a wireline (5),
- an electric motor (6) powered by the wireline for rotating a rotatable shaft (7) at a first rotational speed,
- an operational tool part (10) for performing the operation by means of electricity and/or hydraulic fluid, and
- a pericyclic gear (8) arranged between the electric motor and the operational tool part, the pericyclic gear being driven by the rotatable shaft of the electric motor for rotation of the operational tool part by an output rotatable shaft (7') at a second rotational speed,
wherein the pericyclic gear has a channel (9) through which an electric and/or a fluid line (11) extends to provide electricity and/or fluid power for operating the operational tool part.

2. A downhole wireline tool according to claim 1, wherein the pericyclic gear is a nutating pericyclic gear such as a wobbling or nutating bevel gear.

3. A downhole wireline tool according to claim 1 or 2, wherein the channel is provided by a through-bore in the rotatable shaft and the output rotatable shaft.

4. A downhole wireline tool according to any of the preceding claims, wherein the pericyclic gear is a reduction gear for reducing the rotational speed of the rotatable shaft.

5. A downhole wireline tool according to any of the preceding claims, wherein the pericyclic gear comprises a reaction control member (44) driven by the rotatable shaft, a pericyclic motion converter (45) driven by the reaction control member, and an output gear (46) driven by the pericyclic motion converter for driving an output rotatable shaft (7') connected to the first gearing part.

6. A downhole wireline tool according to any of the preceding claims, wherein the operational tool part comprises a drilling bit (16, 16a) or a machining bit (16, 16b).

7. A downhole wireline tool according to claim 6, wherein the operational tool part comprises a vibration-generating unit (12) for providing vibration force on the first drilling bit.

8. A downhole wireline tool according to any of the preceding claims, further comprising a driving unit (17) for driving the vibration-generating unit, the driving unit being powered by the line extending through the channel.

9. A downhole wireline tool according to any of the preceding claims, further comprising a pump unit (14) driven by the electric motor at a first rotational speed for providing fluid power in the form of pressurised fluid to the operational tool part through the line extending through the channel.

10. A downhole wireline tool according to claim 8 and 9, wherein the pump unit pumps fluid internally of the tool to provide pressurised fluid inside the channel and in part of the tool string to compensate for and provide an overpressure in the tool string so that well fluid cannot enter unintended parts of the tool string.

11. A downhole wireline tool according to any of the preceding claims, wherein both a fluid line (11, 11a) and an electric line (11, 11b) extend along and inside the channel.

12. A downhole wireline tool according to claim 9, wherein the operational tool part comprises at least one cutting arm (23) with at least one cutting element (24), the at least one cutting arm being projectable by means of the pressurised fluid for moving the cutting arm between a retracted position and a projected position, and the operational tool part being rotated by the output rotatable shaft for cutting in the well tubular metal structure.

13. A downhole wireline tool according to claim 9, wherein the pump unit comprises at least one pump inlet (15) in fluid communication with the well fluid for taking in well fluid from the well and ejecting the fluid again in the vicinity of the operational tool part.

14. A downhole wireline tool according to any of the preceding claims, wherein the pericyclic gear comprises bearings (47) arranged between the rotatable shaft and the reaction control member, the pericyclic motion converter and the output gear.

15. Downhole system (100) comprising the downhole wireline tool according to any of claims 1-14 and a driving unit, such as a downhole tractor, for propelling the downhole system forward in the well.
